# EUROPÄISCHE PATENTSCHRIFT

(11) **EP 2 297 932 B1**
(45) Veröffentlichungstag und Bekanntmachung des Hinweises auf die Patenterteilung: **26.03.2014**
(21) Anmeldenummer: 09765687.0
(22) Anmeldetag: 12.05.2009
(51) Int. Cl.: G06Q 10/10, H04M 1/725

(54) **MOBILTELEFON MIT BERÜHRUNGSSENSITIVEM BILDSCHIRM ZUR INTUITIVEN VERSENDUNG VON DATENPAKETEN**
MOBILE TELEPHONE COMPRISING A TOUCH-SENSITIVE SCREEN FOR THE INTUITIVE TRANSMISSION OF DATA PACKETS
TÉLÉPHONE MOBILE AVEC ÉCRAN TACTILE POUR L'ÉMISSION INTUITIVE DE PAQUETS DE DONNÉES

(30) Priorität: 18.06.2008 DE 102008028636
(43) Veröffentlichungstag der Anmeldung: 23.03.2011
(73) Patentinhaber: Deutsche Telekom AG, 53113 Bonn (DE)
(72) Erfinder: FLIK, Dominic, 85521 Ottobrunn (DE); RESPONDEK, Peter, A-8511Greisodrf (AT)
(74) Vertreter: Braun-Dullaeus, Karl-Ulrich
(86) Internationale Anmeldenummer: PCT/EP2009/055732
(87) Internationale Veröffentlichungsnummer: WO 2009/153107

(56) Entgegenhaltungen:
- WO-A-01/99033
- US-A- 5 801 700
- US-A1- 2003 222 913

## Beschreibung

Die Erfindung betrifft ein mobiles Endgerät zur Datenübertragung über eine drahtlose Übertragungsstrecke, insbesondere ein Mobiltelefon zur Telekommunikation über ein Kommunikationsnetz, aufweisend einen berührungssensitiven Bildschirm ("Touch Screen") zur Darstellung verschiedener Anordnungen, wobei eine Anordnung Bedienelemente und/oder Informationsanzeigen umfasst, wobei das Endgerät mehrere, durch unterschiedliche solcher Anordnungen charakterisierte Betriebsmodi hat, wobei ein Betriebsmodus zur Versendung von Datenpaketen vorgesehen ist. Die Erfindung betrifft auch ein Verfahren zur Bedienung eines solchen Endgerätes.

Die US 2003/0222913 A1 betrifft eine Nutzerschnittstelle zum Übermitteln von Daten mit einem Kommunikationsterminal. Auf dem Anzeigebereich eines Endgerätes ist ein Bereich für die Daten des Nutzers und ein Bereich für die Daten eines anderen Nutzers vorgesehen. Durch Verschieben von Daten zwischen den unterschiedlichen Bereichen können die Daten den jeweiligen Nutzern zugespielt werden.

Die JP 2004 252676 betrifft ein berührungsempfindliches Display für die Verwendung in einem Mobiltelefon. Die berührungsempfindliche Oberfläche ist in Bezug zur graphischen Oberfläche gewölbt und dadurch beabstandet zu dieser ausgebildet.

Mobiltelefone zum Versenden von Datenpaketen, insbesondere von Textnachrichten ("SMS"), von Bildern und/oder von Mediendaten ("MMS"), sind an sich bekannt. Bei diesen Geräten kann ein Datenpaket erstellt und ein Absender vorgegeben werden, dem dieses Datenpaket vermittels des Kommunikationsnetzes übermittelt wird. Dabei sind für das Versenden des Datenpaketes nach dem Erstellen oder Aufrufen des Datenpaketes mehrere Bedienschritte notwendig. Diese umständliche Prozedur ist zwar zu erlernen, jedoch ist sie meist recht umständlich und keinesfalls intuitiv durchzuführen. Insgesamt trägt sie nicht zur Erhöhung der Attraktivität, insbesondere des "fun factors" dieses an sich gerade für Jugendliche attraktiven Dienstes bei.

Die Aufgabe der vorliegenden Erfindung liegt nunmehr darin, ein Endgerät und ein Verfahren zur seiner Bedienung anzugeben, das zu einer erhöhten Attraktivität datenversendender Dienste führt, wobei der Datenversand auf intuitive Weise initiiert wird und einen nachhaltigen Eindruck beim sendenden Nutzer hinterlässt. Insbesondere soll die visuelle Wahrnehmbarkeit verbessert werden.

Diese Aufgaben werden durch das Endgerät mit den Merkmalen des Anspruch 1 und das Verfahren nach Anspruch 14 gelöst. Vorteilhafte Ausführungsformen sind in den jeweiligen Unteransprüchen genannt.

Ein erster wesentlicher Grundgedanke der Erfindung liegt darin, dass im Betriebsmodus zur Versendung von Daten auf dem "Touch Screen" Bildschirm zumindest zwei getrennte Bereiche gezeigt sind, von denen der eine einen Absenderbereich definiert, der für den Nutzer eindeutig als solcher symbolisiert und damit erkennbar ist. Der zweite Bereich symbolisiert ebenfalls auf eindeutige Weise einen Empfängerbereich, indem eine entsprechende Symbolik verwendet wird, die unverkennbar auf die Identität des Empfängers hinweist.

Dem Absenderbereich ist auf erkenntliche Weise das zu versendende Datenpaket zugeordnet. Dem Empfängerbereich, der nicht unbedingt aktiv sein muss, ist hingegen die Empfangsadresse des Empfängers zugeordnet. Dabei ist es unerheblich, ob Absender und Empfänger mit ihren Endgeräten über ein Kommunikationsnetz und/oder über eine direkte Funkverbindung, wie Blue Tooth, kommunizieren. Ganz wesentlich ist nun, dass eine einfache Berührung des sensiblen Absenderbereiches den Versand der zu versendenden Daten an die Empfangsadresse bewirkt. Dabei ist das Layout des Bildschirms so instruktiv ausgelegt, dass der Absender die Aktion des Versendens intuitiv ausführt.

Dabei kann das zu versendende Datenpaket eine oder mehrere im Endgerät gespeicherte Dateien und/oder einen oder mehrere Verweise auf externe Dateien enthalten. Vorteilhafterweise wird das Datenpaket eine Textnachricht, beispielsweise in der Form einer Email oder einer SMS, oder eine Mediendatei, beispielsweise ein Bild, ein Musikstück und/oder eine Sprachansage enthalten, die in Form einer Email mit Anhang oder in Form einer MMS verschickt wird.

Dabei hat das Endgerät, insbesondere das Mobiltelefon, einen zumindest in einer Richtung gewölbten Bildschirm. Mit einem solchen gewölbten Bildschirm kann der Eindruck des Wegfliegens und damit die Emotion noch weiter gesteigert werden. Insbesondere kann eine konvexe Wölbung entlang der Längsachse des Endgerätes vorgesehen werden, so dass das Endgerät quasi nach hinten abfällt. Eine solche Wölbung vermittelt dem Nutzer den Eindruck eines offenen Horizontes, hinter dem die Nachricht verschwindet. Dieser Eindruck wird weiter gesteigert, wenn der unmittelbare Rand des gewölbten Bildschirms den Grundkörper des Endgerätes überragt, wenn der nutzbare Bildschirm also den hinteren oberen Rand bildet. Insbesondere weist der gewölbte Bildschirm einen Darstellungsbereich auf, der zumindest an dem den Horizont bildenden Rand unmittelbar endet. Dadurch, dass die Pixel quasi bis an den Rand gehen, lassen sich alle möglichen Effekte grafisch erzeugen, die mit der unmittelbaren Ferne hinter dem "Horizont" respektive mit der Unendlichkeit spielen.

In einer besonders smarten Ausführungsform ist die Berührung ein ununterbrochenes Überstreichen des Absenderbereiches, insbesondere mit dem Finger, in Richtung Empfängerbereich. Der Absender beschleunigt das Datenpaket, also insbesondere die Nachricht, mit einem "wischenden" Fingerzeig in Richtung Empfänger. Der Bildschirm wird demnach mit dem Finger überstrichen, wobei die streichende Berührung im Absenderbereich beginnt und aus diesem heraus führt.

Eine solche Bewegung entspricht gefühlsmäßig der dadurch initiierten Aktion besonders gut, so dass der Absender ein tatsächliches Absendeerlebnis verspürt und nicht nur das Gefühl hat, dass seine Nachricht in einem schwarzen Loch verschwindet. Ein solches Absendeerlebnis führt insgesamt zu einer höheren Glaubwürdigkeit des Versandverfahrens. Der Absender ist sich damit viel sicherer, dass seine Nachricht abgesendet wurde und er bekommt auch das Gefühl, dass sie wirklich ankommt. Einige der später aufzuzählenden Merkmale sind darauf gerichtet, dieses Absendeerlebnis noch weiter zu verstärken, um die damit verbundenen Gefühle stärker anzuregen respektive zu betonen.

Vorteilhafterweise ist die den Empfängerbereich definierende Empfangsadresse einer Person oder einer Personengruppe zugeordnet, die in einer, insbesondere im Endgerät vorhandenen Telefonbuchdatei hinterlegt ist. Dann ist es im Hinblick auf eine intuitive Bedienung weiter vorteilhaft, wenn möglichst für sich sprechende und sofort erkennbare Daten im Empfängerbereich angezeigt werden. Ganz besonders vorteilhaft ist es, wenn im Zusammenhang mit der Empfangsadresse ein Bild der Person oder der Personen gespeichert ist, das im Empfängerbereich dargestellt werden kann. Der Absender hat dann das Bild von dem Empfänger direkt vor Augen.

Insbesondere wenn eine solch intuitive Erkennung der Empfänger gegeben ist, dann ist es möglich, auf dem Bildschirm verschiedene Empfängerbereiche, die beispielsweise einer Personengruppe zugeordnet sind, zu definieren. In diesem Fall ist es angezeigt, auch diese Empfängerbereiche auf den Touch Screen zu aktivieren. Um einen Versand an einen bestimmten Empfänger zu veranlassen muss dann der ersten Berührung des Absenderbereiches eine Berührung eines des entsprechenden Empfängerbereiches nachfolgen. Im Hinblick auf die Steigerung des Absendeerlebnisses ist es vorteilhaft, wenn das Versenden durch ein ununterbrochenes Überstreichen des Bildschirms mit der anfänglichen Berührung des Absenderbereiches beginnt und "smooth" mit der Berührung des Empfängerbereiches endet, wobei es auch möglich ist, dass der Finger des Nutzers dabei über den aktiven Empfängerbereich hinausstreicht. Je nach Ausführungsform kann die streichende Berührung im Empfängerbereich enden, sie muss es aber nicht.

Eine besondere Möglichkeit, das positive Gefühl des Absenders anzusprechen besteht darin, dass der Versand der Datei durch ein auf dem Bildschirm vom Absenderbereich zum Empfängerbereich und insbesondere darüber hinaus wanderndes Symbol gekennzeichnet ist, so dass der Absender seine Nachricht sieht und ihr hinterher schauen kann. Das sich über den Empfängerbereich und den Rand des Bildschirms hinaus bewegende Symbol hinterlässt den Eindruck des Wegfliegens. Der Eindruck des Wegfliegens kann durch grafische Mittel, beispielsweise durch einen sich verändernden Schatten, durch sich reduzierende Dimensionen des Symbols und/oder durch ein Spiel mit der Bewegungsgeschwindigkeit noch deutlicher hervor gehoben werden.

Deutlich gesteigert wird das Gefühl noch, wenn das Symbol ("Icon") einen "sprechenden" Charakter hat oder sogar "lebt". Im einfachsten Fall kann die Textnachricht mit dem Icon eines Briefes symbolisiert werden. Der Versandt dieses Briefes würde "leben", wenn das Icon die Gestalt wechseln würde und dabei beispielsweise den Eindruck des Flatterns erweckt. Das Icon kann aber auch in Verbindung mit dem Inhalt des Briefes stehen. So kann der Versandt eines Musikstückes durch eine fliegende Scheibe in Form einer CD symbolisiert werden. Eine Liebesnachricht würde klassisch mit einem fliegenden Herz symbolisiert, wobei eine ein unangenehmer Inhalt eher mit einer symbolisierten Bombe versandt würde. Die Übertragung könnte so organisiert sein, dass die Nachricht mit dem jeweiligen Symbol auch beim Empfänger ankommt.

Ein anderer Effekt kann erzeugt werden, wenn der Rand des Bildschirms einem kleinen entgegengesetzten Schwung, insbesondere eine schanzenartig konkave Randwölbung aufweist. Bei einer solchen Anordnung kann der Effekt einer noch weiteren Beschleunigung erzeugt werden. Ein solcher Effekt wird auch durch einen insgesamt etwas konkav gewölbten Bildschirm erzeugt.

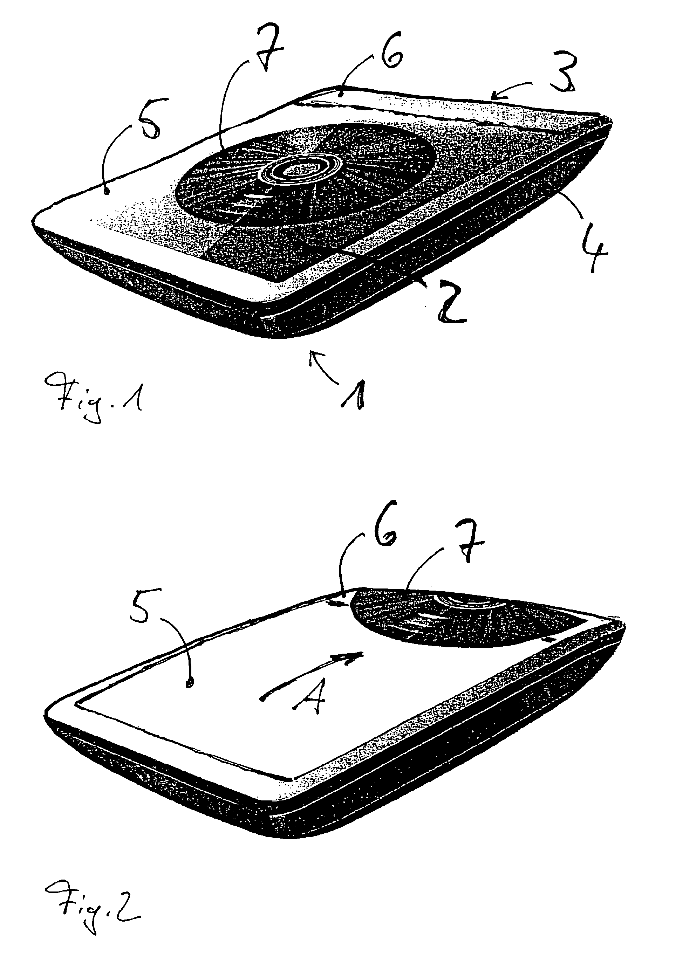

Nachfolgend wird die Erfindung anhand der Figuren 1 und 2 näher erklärt. Es zeigen
- **Figur 1**: ein Mobiltelefon mit gewölbtem Bildschirm und
- **Figur 2:**: eine vom Bildschirm verschwindende Datei.

In den Figuren 1 und 2 ist ein Mobiles Endgerät für die Datenübertragung über eine drahtlose Übertragungsstrecke, nämlich ein Mobiltelefon 1 zur Telekommunikation über das GSM Netz, gezeigt. Dieses hat einen berührungssensitiven Bildschirm 2 ("Touch Screen") zur Darstellung der für den Gebrauch des Endgerätes 1 wichtigen Funktionen, die sich in entsprechenden Anordnungen von Bedienelementen und/oder Informationsanzeigen manifestieren. Das Mobiltelefon hat mehrere, durch unterschiedliche solcher

Anordnungen charakterisierte Betriebsmodi, wobei hier ein Betriebsmodus zur Versendung von Datenpaketen dargestellt ist.

Der dargestellte Bildschirm 2 weist entlang der Längsachse eine leichte konvexe Wölbung auf, wobei die Wölbung dem Nutzer den Eindruck eines offenen Horizontes 3 vermittelt. Um diesen Effekt zu unterstreichen, überragt der Bildschirm den Grundkörper 4 des Endgerätes, wobei der Darstellungsbereich des gewölbten Bildschirms 2 unmittelbar an dem den Horizont 3 bildenden Rand endet.

In diesem Betriebsmodus ist der berührungssensitive Bildschirm in zwei getrennte Bildschirmbereiche aufgeteilt. Zum einen ist ein Absenderbereich 5 vorhanden. Der andere Bereich ist der Empfängerbereich 6. Dem Absenderbereich ist ein Datenpaket, in diesem Fall ein Music-Clip, zugeordnet, der mit einem eine Schallplatte darstellenden Icon 7 symbolisiert ist. Dem Empfängerbereich ist eine Empfangsadresse zugeordnet.

Durch eine wischende Bewegung mit dem Finger auf dem Bidschirm wird das Icon aufgegriffen und in Richtung des Empfängerberiches 6 verschoben. Diese Aktion initiiert den Versandt des Datenpaketes vom Endgerät an die Empfangsadresse. Dabei wird der Versand durch die auf dem Bildschirm vom Absenderbereich zum Empfängerbereich entlang des Pfeiles A wandernde Schallplatte visualisiert. Die wandernde Schallplatte verursacht den den Eindruck des über den Rand hinaus Fliegens.

## Patentansprüche

1. Mobiles Endgerät (1) für die Datenübertragung über eine drahtlose Übertragungsstrecke, insbesondere Mobiltelefon zur Telekommunikation über ein Kommunikationsnetz, aufweisend einen berührungssensitiven Bildschirm (2) zur Darstellung verschiedener Anordnungen umfassend Bedienelemente und/oder Informationsanzeigen, wobei das Endgerät mehrere, durch unterschiedliche solcher. Anordnungen charakterisierte Betriebsmodi hat, wobei ein Betriebsmodus zur Versendung von Datenpaketen vorgesehen ist,
wobei der berührungssensitive Bildschirm (2) im Betriebsmodus zur Versendung von Datenpaketen zwei getrennte Bildschirmbereiche, nämlich einen Absenderbereich (5) und einen Empfängerbereich (6), aufweist, wobei dem Absenderbereich (5) ein Datenpaket (7) und dem Empfängerbereich (6) eine Empfangsadresse zugeordnet ist, wobei eine Aktion des Nutzers umfassend eine Berührung des Absenderbereiches (5) einen Versand des Datenpaketes (7) vom Endgerät (1) an die Empfangsadresse auslöst,
**dadurch gekennzeichnet,**
**dass** der Bildschirm (2) zumindest in einer Richtung eine Wölbung aufweist, wobei der Bildschirm (2) entlang der Längsachse (A) des Endgerätes (1) konvex gewölbt ist, und
**dass** der Versand durch ein auf dem Bildschirm (2) vom Absenderbereich (5) zum Empfängerbereich (6) entlang der Längsachse (A) wanderndes Symbol (7) dargestellt ist.

2. Endgerät nach dem vorherigen Anspruch,
**dadurch gekennzeichnet,**
**dass** das Datenpaket eine oder mehrere im Endgerät gespeicherte Dateien und/oder einen oder mehrere Verweise auf externe Dateien aufweist.

3. Endgerät nach dem vorherigen Anspruch,
**dadurch gekennzeichnet,**
**dass** als Datei eine SMS und/oder eine MMS im Datenpaket enthalten ist.

4. Endgerät nach einem der vorherigen Ansprüche,
**dadurch gekennzeichnet,**
**dass** die durch den Empfängerbereich (6) definierte Empfangsadresse einer Person oder einer Personengruppe zugeordnet und in einer Telefonbuchdatei hinterlegt ist.

5. Endgerät nach Anspruch 4,
**dadurch gekennzeichnet,**
**dass** im Zusammenhang mit der Empfangsadresse ein Bild der Person(en) gespeichert ist, das im Empfängerbereich (6) dargestellt ist.

6. Endgerät nach einem der vorherigen Ansprüche,
**dadurch gekennzeichnet,**
**dass** der gewölbte Bildschirm (2) einen Darstellungsbereich aufweist, der zumindest an dem den Horizont (3) bildenden Rand unmittelbar endet.

7. Endgerät nach Anspruch 6,
**dadurch gekennzeichnet,**
**dass** der unmittelbare Rand des gewölbten Bildschirms den Grundkörper (4) des Endgerätes überragt.

8. Endgerät nach Anspruch 7,
**dadurch gekennzeichnet,**
**dass** der den Grundkörper (4) überragende Rand im äußeren Bereich eine schanzenartig konkave Randwölbung aufweist.

9. Verfahren zur Bedienung eines Endgerätes nach einem der vorherigen Ansprüche,
**dadurch gekennzeichnet,**
**dass** der Bildschirm (2) mit einem Finger überstrichen wird, wobei eine streichende Berührung im Absenderbereich (5) beginnt und aus diesem heraus führt, und
**dass** der Versand durch ein auf dem Bildschirm (2) vom Absenderbereich (5) zum Empfängerbereich (6) entlang der Längsachse (A) wanderndes Symbol (7) dargestellt ist.

10. Verfahren nach Anspruch 9,
**dadurch gekennzeichnet,**
**dass** die streichende Berührung im Empfängerbereich (6) endet.

11. Verfahren nach Anspruch 9 oder 10,
**dadurch gekennzeichnet,**
**dass** die Versendung des Datenpaketes durch ein sich über den Bildschirm bewegendes Symbol (7) angedeutet wird, das den Empfängerbereich (6) erreicht und insbesondere im Empfängerbereich (6) verschwindet.

12. Verfahren nach einem der Ansprüche 9 bis 11,
**dadurch gekennzeichnet,**
**dass** der Berührung des Absenderbereiches (5) eine Berührung des Empfängerbereiches (6) nachfolgt.

13. Verfahren nach einem der Ansprüche 9 bis 12,
**dadurch gekennzeichnet,**
**dass** die Berührung ein ununterbrochenes Überstreichen des Absenderbereiches (5) in Richtung Empfängerbereich (6) ist.

14. Verfahren nach Anspruch 13,
**dadurch gekennzeichnet,**
**dass** das ununterbrochene Überstreichen des Bildschirms (2) mit der anfänglichen Berührung des Absenderbereiches (5) beginnt und mit der Berührung des Empfängerbereiches (6) endet.

## Claims

1. Mobile device (1) for the data transmission via a wireless transmission path, in particular mobile phone for the telecommunication via a communication network, comprising a touch screen (2) for the display of different formations comprising operation elements and/or information displays, wherein the device comprise different modes of operation, which are **characterized by** such differing formations, wherein a mode of operation is provided for the transmission of data packets,
wherein in the mode of operation for the transmission of data packets the touch screen (2) comprises two different screen portions, namely an addressor portion (5) and a recipient portion (6), wherein a data packet (7) is associated to the addressor portion (5) and an address of recipient is associated to the recipient portion (6), wherein an action of the user comprising touching of the addressor portion (5) initiates a transmission of the data packet (7) from the device (1) to the address of recipient,
**characterized in,**
**that** the screen (2) comprises a camber at least along one direction, wherein the screen (2) is cambered along the longitudinal axis (A) of the device (1) in a convex way, and
**that** the transmission is visualized on the screen by a symbol (7) hiking from the addressor portion (5) to the recipient portion (6) along the longitudinal axis (A).

2. Device according the preceding claim,
**characterized in,**
**that** the data packet comprises one or more files stored in the device and/or one or more links to external files.

3. Device according the preceding claim,
**characterized in,**
**that** a SMS and/or MMS is comprised in the data packet as the file.

4. Device according to one of the preceding claims,
**characterized in,**
**that** the address of recipient defined by the recipient portion (6) is associated to a person or a group of persons and is stored in a phone directory file.

5. Device according claim 4,
**characterized in,**
**that** in combination with the address of recipient an image of the person(s) is stored, which is displayed in the recipient portion (6).

6. Device according to one of the preceding claims,
**characterized in,**
**that** the cambered screen (2) comprise a display portion, which at least ends immediate at the border, which constitutes the horizon (3).

7. Device according claim 6,
**characterized in,**
**that** the immediate border of the cambered screen exceeds the base body (4) of the device.

8. Device according claim 7,
**characterized in,**
**that** the border exceeding the base body (4) comprise a jumplike concave boder-camber in the outer area.

9. Method for the handling of a device according the one of the preceding claims,
**characterized in,**
**that** the screen (2) is smeared by a finger, wherein a smearing touch starts in the addressor portion (5) und leads out of it, and
**that** the transmission is visualized by a symbol (7) hiking on the screen (2) from the addressor portion (5) to the recipient portion (6) along the longitudinal axis (A).

10. Method according claim 9,
**characterized in,**
**that** the smearing touch ends in the recipient portion (6).

11. Method according claim 9 or 10,
**characterized in,**
**that** the transmission of that data packet is indicated by a symbol (7) moving over the screen, which arrives at the recipient portion (6) and in particular disappears in the recipient portion (6).

12. Method according to one of claims 9 to 11,
**characterized in,**
**that** the touch of the addressor portion (5) is followed by a touch of the recipient portion (6).

13. Method according to one of claims 9 to 12,
**characterized in,**
**that** the touch is an uninterrupted smearing of the addressor portion (5) in direction of the recipient portion (6).

14. Method according claim 13,
**characterized in,**
**that** the uninterrupted smearing of the screen starts with the initial touch of the addressor portion (5) and ends with the touch of the recipient portion (6).

## Revendications

1. Terminal (1) mobile pour la transmission de données sur une distance de transmission sans fil, en particulier téléphone mobile pour télécommunication sur un réseau de télécommunication, présentant un écran (2) tactile pour représenter des arrangements différents comprenant des éléments de commande et/ou des affichages d'informations, le terminal ayant plusieurs modes de fonctionnement **caractérisés par** des arrangements de ce type différents,un mode de fonctionnement étant prévu pour envoyer des paquets de données, l'écran (2) tactile présentant deux zones d'écran séparées, à avoir une zone d'expéditeur (5) et une zone de destinataire (6) en mode de fonctionnement pour envoyer des paquets de données, un paquet de données (7) étant attribué à la zone d'expéditeur (5) et une adresse de destination à la zone de destinataire (6), une action de l'utilisateur comprenant un contact de la zone d'expéditeur (5) déclenchant un envoi du paquet de données (7) du terminal (1) à l'adresse de destination
**caractérisé en ce que**
l'écran (2) présente au moins une courbure dans une direction, l'écran (2) étant bombé de façon convexe le long de l'axe longitudinal (A) du terminal (1) et
**en ce que** l'envoi est représenté par un symbole (7) migrant sur l'écran (2) le long de l'axe longitudinal (A) de la zone d'expéditeur (5) à la zone de destinataire (6).

2. Terminal selon la revendication précédente
**caractérisé en ce que**
le paquet de données présente un ou plusieurs fichiers mémorisés dans le terminal et/ou un ou plusieurs renvois à des fichiers externes.

3. Terminal selon la revendication précédente
**caractérisé en ce**
**qu'**un SMS et/ou un MMS est reçu sous forme de fichier dans un paquet de données.

4. Terminal selon une quelconque des revendications précédentes
**caractérisé en ce que**
l'adresse de destination définie par la zone de destinataire (6) est attribuée à une personne ou à un groupe de personnes et est mémorisée dans un fichier de répertoire téléphonique.

5. Terminal selon la revendication 4
**caractérisé en ce**
**qu'**une photo de la/des personne(s) en rapport avec l'adresse de destination est mémorisée qui est représentée dans la zone de destinataire (6).

6. Terminal selon une quelconque des revendications précédentes
**caractérisé en ce que**
l'écran (2) bombé présente une zone de représentation qui se termine au moins directement sur le bord formant l'horizon (3).

7. Terminal selon la revendication 6
**caractérisé en ce que**
le bord direct de l'écran bombé dépasse le corps de base (4) du terminal.

8. Terminal selon la revendication 7
**caractérisé en ce que**
le bord dépassant le corps de base (4) présente dans la zone extérieure un bombement de bord concave de type bastingage.

9. Procédé de manipulation d'un terminal selon une quelconque des revendications précédentes
**caractérisé en ce que**
l'écran (2) est balayé par un doigt, un contact par passage de la main commençant dans la zone d'expéditeur (5) et conduisant de celle-ci vers l'extérieur et **en ce que** l'envoi est représenté par un symbole (7) migrant sur l'écran (2) le long de l'axe longitudinal (A) de la zone d'expéditeur (5) à la zone de destinataire (6).

10. Procédé selon la revendication 9
**caractérisé en ce que**
le contact par passage de la main se termine dans la zone des destinataire (6).

11. Procédé selon la revendication 9 ou 10
**caractérisé en ce que**
l'envoi de paquet de données est indiqué par un symbole (7) se déplaçant sur l'écran qui atteint la zone de destinataire (6) et disparaît en particulier dans la zone de destinataire (6)

12. Procédé selon une quelconque des revendications 9 à 11
**caractérisé en ce**
**qu'**au contact de la zone d'expéditeur (5) succède un contact de la zone de destinataire (6).

13. Procédé selon une quelconque des revendications 9 à 12
**caractérisé en ce que**
le contact est un balayage par passage de la main ininterrompu de la zone d'expéditeur (5) en direction de la zone de destinataire (6).

14. Procédé selon la revendication 13
**caractérisé en ce que**
le balayage par passage de la main ininterrompu de l'écran (2) commence par le contact initial de la zone d'expéditeur (5) et se termine avec le contact de la zone de destinataire (6).
